# EUROPEAN PATENT APPLICATION

(11) **EP 3 806 001 A1**
(43) Date of publication of application: **14.04.2021**
(21) Application number: 18922022.1
(22) Date of filing: 07.06.2018
(51) Int. Cl.: G06Q 10/00

(54) **DEVICE CONTROL SYSTEM**

(71) Applicant: Mitsubishi Electric Corporation, Tokyo 100-8310 (JP)
(72) Inventor: SUGIYAMA, Yuta, Tokyo 102-0073 (JP); KATAYAMA, Kazuyuki, Tokyo 102-0073 (JP)
(74) Representative: Diehl & Partner
(86) International application number: PCT/JP2018/021945
(87) International publication number: WO 2019/234899

(57) **Abstract**

A device control system (100) is provided with: a control subject device (4a, 4b); a wearable device (3) for acquiring biological information of a user; a management server (1) for identifying, upon reception of the biological information, personal data associated with the user of the wearable device from among a plurality of pieces of personal data which indicate preferences of each user which relate to an operation condition of the control subject device, and on the basis of the received biological information and the identified personal data, generating the operation condition of the control subject device; and a controller (2a, 2b) for generating, on the basis of the operation condition generated by the management server, a control signal for controlling the control subject device, and transmitting the generated control signal to the control subject device.

## Description

### Field

The present invention relates to a device control system that controls a device to be controlled.

### Background

Heretofore, there has been a technique of using detection data acquired by use of a sensor when determining an operating condition of a device to be controlled, such as an air conditioner. Patent Literature 1 discloses a technique which accurately determines a user's location by using the location of a mobile terminal held by the user and a detection value of a human detection sensor, and uses an operating condition preset for each specified user as an operating condition of a device to be controlled. The operating condition is preset according to the user's preference.

### Citation List

### Patent Literature

Patent Literature 1: Japanese Patent Application Laid-open No. 2015-61203

### Summary

### Technical Problem

However, the technique described in Patent Literature 1 has a problem in that although it is possible to detect the movement of the user and determine an operating condition in accordance with the preference of the user by continuing to use an operating condition set before the movement, it is not possible to determine an operating condition in accordance with the current state of the user.

The present invention has been made in view of the above, and an object of the present invention is to obtain a device control system capable of determining the operating condition of a device to be controlled in accordance with a user's preference and the current state of the user.

### Solution to Problem

To solve the above problem and achieve an object, there is provided a device control system according to the present invention including: a device to be controlled; a wearable device to acquire biometric information on a user; a management server to determine personal data associated with the user of the wearable device when receiving the biometric information, and to generate an operating condition of the device to be controlled, based on the received biometric information and the determined personal data, the personal data being one of a plurality of pieces of personal data indicating a preference of each user regarding the operating condition of the device to be controlled; and a controller to generate a control signal for controlling the device to be controlled, based on the operating condition generated by the management server, and to transmit the generated control signal to the device to be controlled.

### Advantageous Effects of Invention

A device control system according to the present invention has the effect of enabling determination of the operating condition of a device to be controlled in accordance with a user's preference and the state of the user.

### Brief Description of Drawings

FIG. 1 is a diagram illustrating the configuration of a device control system according to a first embodiment of the present invention.
FIG. 2 is a diagram illustrating the configuration of a management server illustrated in FIG. 1.
FIG. 3 is a diagram illustrating the configuration of a controller illustrated in FIG. 1.
FIG. 4 is a sequence diagram illustrating the operation of the device control system illustrated in FIG. 1.

### Description of Embodiments

Hereinafter, a device control system according to an embodiment of the present invention will be described in detail with reference to the drawings. Note that the present invention is not limited to the embodiment.

### First Embodiment.

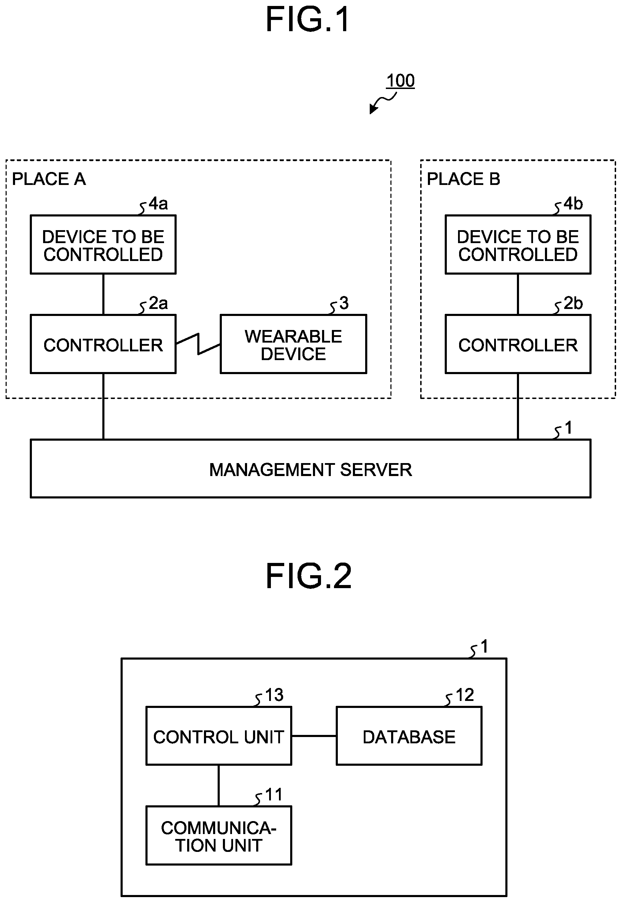

FIG. 1 is a diagram illustrating the configuration of a device control system 100 according to a first embodiment of the present invention. The device control system 100 includes a management server 1, controllers 2a and 2b, a wearable device 3, and devices 4a and 4b to be controlled. Hereinafter, when the controllers 2a and 2b are not distinguished from each other, the controllers 2a and 2b may be collectively referred to as controllers 2. Similarly, when the devices 4a and 4b to be controlled are not distinguished from each other, the devices 4a and 4b to be controlled may be collectively referred to as devices 4 to be controlled.

The controller 2a and the device 4a to be controlled are installed at a place A. The controller 2b and the device 4b to be controlled are installed at a place B. The wearable device 3 is a device to be worn by a user, and moves in accordance with the movement of the user.

The management server 1 is connected to the controllers 2a and 2b via a communication path such as the Internet. The management server 1 is, for example, a cloud server, and can control the devices 4a and 4b to be controlled via the controllers 2a and 2b.

The controller 2 is connected to the device 4 to be controlled that is previously associated with the controller 2. The connection between the controller 2 and the device 4 to be controlled may be wired or wireless connection. The controller 2 can be wirelessly connected to the wearable device 3. The controller 2 and the wearable device 3 are connected by short-range wireless communication. When the wearable device 3 is located within a distance that allows the wearable device 3 to communicate with the controller 2, the controller 2 and the wearable device 3 can communicate with each other. For example, FIG. 1 illustrates an example in which a user wearing the wearable device 3 is present in the place A. In this case, the wearable device 3 can communicate with the controller 2a. When the user of the wearable device 3 moves to the place B, the wearable device 3 can communicate with the controller 2b.

The wearable device 3 is a device that can be worn by a user, and has the function of acquiring biometric information on the user wearing the wearable device 3. The biometric information includes the amount of activity, the amount of sweat, a body temperature, a heart rate, and the like. The shape of the wearable device 3 is not limited as long as the wearable device 3 can be worn by a user. For example, the wearable device 3 is a wristwatch-type, glasses-type, clothes-type, or earphone-type device. Furthermore, the wearable device 3 transmits user-specific information to the controller 2 for use in user authentication. The user-specific information may be a user identifier (ID), or may be biometric information in the case where the wearable device 3 can acquire user-specific biometric information. Examples of the user-specific biometric information include fingerprint information, iris information, a face image, vein pattern information, voice information, and retina information. When the user-specific information is a user ID, the wearable device 3 transmits, to the controller 2, a user ID stored in advance in the wearable device 3. When the user-specific information is biometric information, the wearable device 3 acquires user-specific biometric information, and transmits the acquired biometric information to the controller 2.

The device 4 to be controlled is controlled by the controller 2. The device 4 to be controlled is a device having the function of changing the state of space, such as an air conditioner, a humidifier, a dehumidifier, or an air purifier.

Note that although an example of installing the single controller 2 and the single device 4 to be controlled at each of the two places A and B has been cited in FIG. 1, the device control system 100 is not limited to such an example. The management server 1 can communicate with a plurality of the controllers 2 installed at three or more places. In addition, there is a one-to-one correspondence between the controller 2 and the device 4 to be controlled in the example illustrated in FIG. 1. However, the controller 2 may be associated with two or more devices 4 to be controlled and serve the function of controlling the plurality of devices 4 to be controlled.

FIG. 2 is a diagram illustrating the configuration of the management server 1 illustrated in FIG. 1. The management server 1 includes a communication unit 11, a database 12, and a control unit 13.

The communication unit 11 is configured by use of a communication device and the like, and has the function of connecting to the controller 2 via the communication path. The communication unit 11 can transmit and receive data to and from the controller 2 via the communication path.

The database 12 is configured by use of a storage device and the like, and holds, as personal data for each user, user identification information and user-specific preference information in association with each other. The personal data are not limited to specific data as long as the personal data include information indicating a user's preference regarding the setting of the device 4 to be controlled. Accordingly, the personal data may be, for example, accumulated data on past operating conditions, or may be user-specific information derived from the past operating conditions, to be referred to in determining the operating condition of the device 4 to be controlled. The personal data may be information indicating a user's preference in accordance with the user's state. The personal data may be information indicating, for example, a tendency such as being sensitive to heat or being sensitive to cold. Furthermore, the personal data are not limited to information based on the past operating conditions, but may be information set by the user itself.

The control unit 13 is configured by use of a central processing unit (CPU) and the like. The control unit 13 can acquire biometric information on the user from the controller 2 via the communication unit 11, and determine personal data associated with the user of the wearable device 3. In the present embodiment, the control unit 13 determines personal data by performing user authentication by use of the biometric information acquired by the wearable device 3. Note that in the case where user identification information such as a user ID is stored in the wearable device 3 such that the wearable device 3 also transmits the identification information when transmitting biometric information to the controller 2, the control unit 13 can also perform user authentication by using the identification information. In the case where user authentication is performed by use of the user ID stored in the wearable device 3, the user needs to be registered in advance in the wearable device 3. In such a case, when the user uses the wearable device 3 of another user, it is not possible to correctly authenticate the user wearing the wearable device 3. Meanwhile, in the case where user authentication is performed by use of the biometric information acquired by the wearable device 3, it is possible to reliably authenticate the user wearing the wearable device 3.

Furthermore, the control unit 13 can generate the operating condition of the device 4 to be controlled, based on the biometric information on the user and the personal data. The control unit 13 can use the personal data to generate an operating condition in accordance with the preference of a user being present in a space in which the device 4 to be controlled is installed. The control unit 13 can also use the biometric information to generate the operating condition in accordance with the current state of the user being present in the device 4 to be controlled. The control unit 13 can transmit the operating condition to the controller 2 via the communication unit 11. At this time, the control unit 13 returns the generated operating condition to the controller 2 which is the source of transmission of the biometric information.

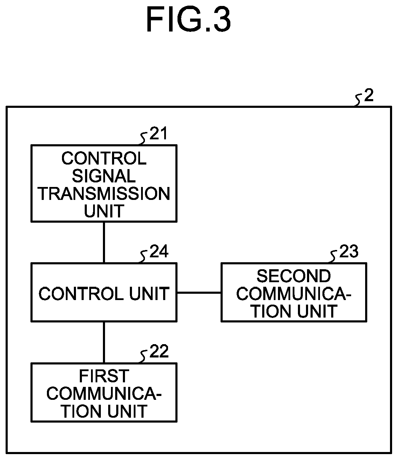

FIG. 3 is a diagram illustrating the configuration of the controller 2 illustrated in FIG. 1. The controller 2 includes a control signal transmission unit 21, a first communication unit 22, a second communication unit 23, and a control unit 24.

The control signal transmission unit 21 has the function of transmitting, to the device 4 to be controlled, a control signal generated by the control unit 24 to be described below. The control signal transmission unit 21 can be configured by use of, for example, an infrared communication device.

The first communication unit 22 is configured by use of a communication device and the like, and has the function of connecting to a communication path such as the Internet. The first communication unit 22 can communicate with the management server 1 via the communication path. The second communication unit 23 has the function of communicating with the wearable device 3 that is physically close to the controller 2. The second communication unit 23 can communicate with the wearable device 3 by using short-range wireless communication such as Bluetooth (registered trademark) or near field communication (NFC) .

When the second communication unit 23 establishes a connection with the wearable device 3, the control unit 24 acquires biometric information from the wearable device 3, and transmits the acquired biometric information to the management server 1 via the first communication unit 22. The control unit 24 is, for example, a microcontroller. The control unit 24 generates a control signal for controlling the device 4 to be controlled, based on an operating condition transmitted from the management server 1. The control unit 24 can transmit the generated control signal to the device 4 to be controlled, by using the control signal transmission unit 21.

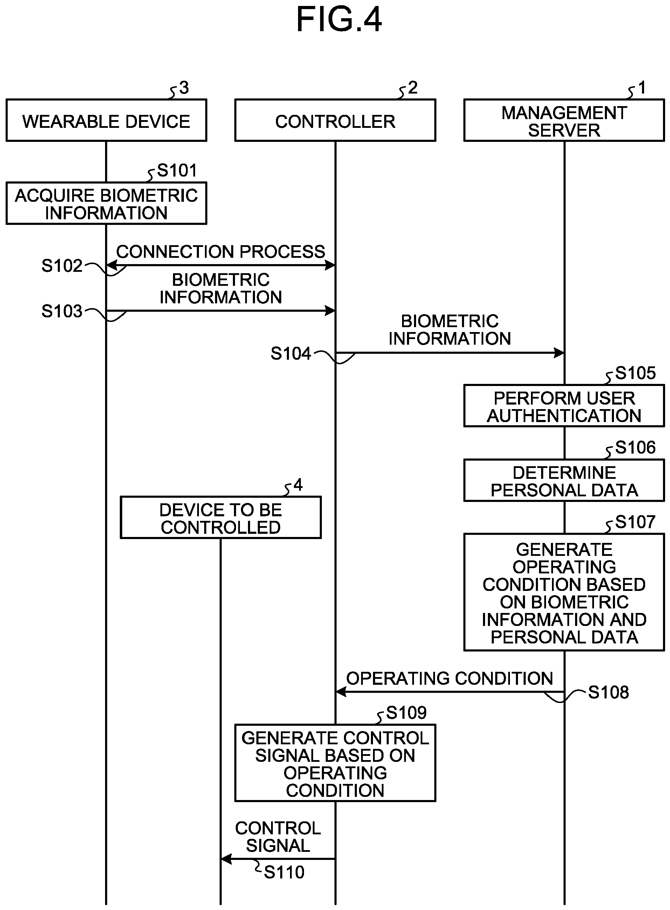

FIG. 4 is a sequence diagram illustrating the operation of the device control system 100 illustrated in FIG. 1. Note that the example illustrated in FIG. 4 is based on the assumption that biometric information includes user-specific information that can be used for user authentication. For example, the wearable device 3 periodically acquires biometric information on a user wearing the wearable device 3 (step S101). When the wearable device 3 approaches the controller 2, the wearable device 3 and the controller 2 perform a connection process (step S102). When connected to the controller 2, the wearable device 3 transmits the acquired biometric information to the controller 2 (step S103).

The controller 2 receives the biometric information transmitted by the wearable device 3, and transmits the received biometric information to the management server 1 (step S104). When the management server 1 receives the biometric information transmitted by the controller 2, the management server 1 performs user authentication by using the received biometric information (step S105). When the management server 1 identifies a user whom the biometric information concerns, that is, the user of the wearable device 3, the management server 1 acquires personal data associated with the identified user from the database 12 (step S106). The management server 1 generates an operating condition of the device 4 to be controlled, based on the received biometric information and the acquired personal data (step S107). The management server 1 transmits the generated operating condition to the controller 2 (step S108).

When the controller 2 receives the operating condition transmitted by the management server 1, the controller 2 generates a control signal for controlling the device 4 to be controlled, based on the received operating condition (step S109). The controller 2 transmits the generated control signal to the device 4 to be controlled (step S110). The device 4 to be controlled that has received the control signal operates based on the control signal.

As described above, in the device control system 100 according to the first embodiment of the present invention, the operating condition of the device 4 to be controlled is generated based on personal data determined as a result of user authentication. It is thus possible to control the device 4 to be controlled in accordance with the preference of the user of the wearable device 3. Furthermore, according to the device control system 100, an operating condition is generated based on biometric information acquired by the wearable device 3. Therefore, it is possible to control the device 4 to be controlled, in accordance with the current state of the user.

Moreover, according to the device control system 100, the controller 2 receives an operating condition from the management server 1, generates a control signal based on the received operating condition, and transmits the generated control signal to the device 4 to be controlled. Therefore, the device 4 to be controlled does not need to be connected to the management server 1. Accordingly, it is not necessary to add a function to the device 4 to be controlled, and it is thus possible to apply control to be performed by use of the wearable device 3 to a wide range of devices.

In addition, according to the device control system 100, the management server 1 performs user authentication by using biometric information acquired by the wearable device 3. Therefore, common information is used as information necessary for identifying a user and information indicating the state of the user. It is thus possible to reduce the amount of data exchange between the wearable device 3 and the controller 2 and the amount of data exchange between the controller 2 and the management server 1.

Furthermore, according to the device control system 100, personal data indicate a user's preference in accordance with the state of the user. For example, the personal data indicate a preference that changes according to the value of biometric information of a user, and can indicate different values as, for example, temperatures set for an air conditioner that is the device 4 to be controlled in the case where the user's body temperature is equal to or higher than a threshold value and in the case where the user's body temperature is lower than the threshold value. In this case, the management server 1 can generate an operating condition based on the user's preference in accordance with the state of the user indicated by the biometric information, by using the biometric information and the personal data.

The configuration set forth in the above embodiment shows an example of the subject matter of the present invention, and it is possible to combine the configuration with another technique that is publicly known, and is also possible to make omissions and changes to part of the configuration without departing from the gist of the present invention.

For example, although the first embodiment has been described with an example in which the single wearable device 3 is used, it is also possible to use a plurality of the wearable devices 3 in the device control system 100. When a plurality of the wearable devices 3 are present in the same place and the device 4 to be controlled has the function of setting an operating condition for each air blowing direction, the controller 2 can also be configured such that the controller 2 determines the locations of the plurality of wearable devices 3, and generates control signals based on the locations of the wearable devices 3 and operating conditions generated corresponding to the users of the wearable devices 3.

### Reference Signs List

1 management server; 2, 2a, 2b controller; 3 wearable device; 4, 4a, 4b device to be controlled; 11 communication unit; 12 database; 13, 24 control unit; 21 control signal transmission unit; 22 first communication unit; 23 second communication unit; 100 device control system.

## Claims

1. A device control system comprising:
a device to be controlled;
a wearable device to acquire biometric information on a user;
a management server to determine personal data associated with the user of the wearable device, from among a plurality of pieces of personal data each indicating a preference of each user regarding an operating condition of the device to be controlled, when receiving the biometric information, and to generate an operating condition of the device to be controlled, based on the received biometric information and the determined personal data; and
a controller to generate a control signal for controlling the device to be controlled, based on the operating condition generated by the management server, and to transmit the generated control signal to the device to be controlled.

2. The device control system according to claim 1, wherein when detecting a connection with the wearable device, the controller acquires the biometric information from the wearable device, and transmits the acquired biometric information to the management server.

3. The device control system according to claim 2, comprising
a plurality of the controllers, wherein
the management server transmits the operating condition to the controller that is a source of transmission of the received biometric information.

4. The device control system according to any one of claims 1 to 3, wherein
the device to be controlled is an air conditioner, and
the biometric information includes at least one of an amount of activity, an amount of sweat, a body temperature, and a heart rate.

5. The device control system according to any one of claims 1 to 4, wherein the management server determines the personal data by performing user authentication based on the biometric information acquired by the wearable device.

6. The device control system according to any one of claims 1 to 5, wherein the personal data include information indicating past operating conditions accumulated in association with the user.

7. The device control system according to claim 1, wherein
the personal data indicate a preference of a user in accordance with a state of the user, and
the management server generates the operating condition based on a preference of the user in accordance with a state of the user indicated by the biometric information.
